# EUROPEAN PATENT APPLICATION

(11) **EP 4 738 455 A1**
(43) Date of publication of application: **06.05.2026**
(21) Application number: 24830813.2
(22) Date of filing: 26.06.2024
(51) Int. Cl.: H01M 4/36, H01M 4/38, H01M 4/583, H01M 10/0525

(54) **NEGATIVE ELECTRODE MATERIAL, NEGATIVE ELECTRODE SHEET, ELECTROCHEMICAL APPARATUS, AND ELECTRIC DEVICE**

(30) Priority: 29.06.2023 CN 202310791499
(71) Applicant: Ningde Amperex Technology Limited, Ningde, Fujian 352100 (CN)
(72) Inventor: TAN, Fujin, Ningde, Fujian 352100 (CN); YI, Zheng, Ningde, Fujian 352100 (CN); ZHENG, Zigui, Ningde, Fujian 352100 (CN); XIE, Yuansen, Ningde, Fujian 352100 (CN)
(74) Representative: Dehns Germany Partnerschaft mbB
(86) International application number: PCT/CN2024/101601
(87) International publication number: WO 2025/002174

(57) **Abstract**

A negative electrode material, a negative electrode plate, an electrochemical apparatus, and an electric device are provided. The negative electrode material includes a core and a shell layer. The core is porous carbon with pores; where a silicon material is present on wall surfaces of the pores. The shell layer is a carbon material, and the shell layer encapsulates the core surface, sealing the pores. In the negative electrode material, the porous carbon and the carbon material of the shell layer have a disordered structure, resulting in less lithium storage. The pores serve as the primary region for lithium storage, with the silicon material present on the wall surfaces of the pores. The silicon material, as a lithiophilic substance, can induce lithium to enter the pores of the core from the external shell layer of the negative electrode material, enabling deposition position to be controlled during lithium metal deposition, reducing non-uniform lithium metal deposition, and thereby facilitating an improvement in the specific capacity and cycling performance of lithium-ion batteries.

## Description

### CROSS-REFERENCE TO RELATED APPLICATIONS

This application claims priority to Chinese Patent Application No. 202310791499.1, filed on June 29, 2023 and entitled "NEGATIVE ELECTRODE MATERIAL, NEGATIVE ELECTRODE PLATE, ELECTROCHEMICAL APPARATUS, AND ELECTRIC DEVICE," which is incorporated herein by reference in its entirety.

### TECHNICAL FIELD

The present application relates to a negative electrode material, a negative electrode plate, an electrochemical apparatus, and an electric device.

### BACKGROUND

Since the commercialization of lithium-ion batteries by Sony Corporation of Japan in 1991, lithium-ion batteries have been widely used in fields such as mobile phones, compact cameras, handheld computers, and notebook computers due to their advantages such as high energy density, high operating voltage, good load characteristics, and fast charging speed.

However, as the demand for battery energy and power performance in downstream applications continues to grow, the capacity of current commercial lithium-ion batteries has become insufficient.

### SUMMARY

Currently, commercial lithium-ion battery negative electrodes primarily use graphite-based materials. Based on the lithium storage mechanism of LiC₆ between graphite layers, their theoretical specific capacity is only 372 mAh/g, with limited room for improvement, and lithium diffusion between graphite layers also restricts their rate performance. Therefore, in the research and preparation of new high-capacity, long-cycle lithium-ion batteries, the negative electrode material is key to the further development of lithium-ion battery technology.

To increase the capacity of lithium-ion batteries, existing technologies construct a porous carbon framework in the anode electrode plate. During battery discharging, lithium metal is stripped from the anode and intercalated into the cathode material, with the porous carbon framework maintaining its shape. During battery charging, lithium metal is stripped from the cathode and deposited onto the anode electrode plate. The porous carbon framework may also disperse current, reduce local current density, thereby suppressing lithium dendrite formation, increasing lithium deposition density, and achieving the purpose of improving lithium-ion battery performance. However, due to the high binding energy between the porous carbon framework and lithium, the deposition position during lithium metal deposition is uncontrollable, leading to non-uniform lithium metal deposition, which causes significant volume changes and rapid capacity decay in the anode electrode plate during cycling.

Based on the above considerations, an objective of the present application is to provide a negative electrode material, a negative electrode plate, an electrochemical apparatus, and an electric device.

Embodiments of the present application are implemented as follows.

According to a first aspect, an embodiment of the present application provides a negative electrode material, where the negative electrode material includes a core and a shell layer;
the core is porous carbon with pores;
a silicon material is present on wall surfaces of the pores; and
the shell layer is a carbon material, and the shell layer encapsulates the core surface, sealing the pores.

In the above negative electrode material, the porous carbon and the carbon material of the shell layer have a disordered structure, resulting in less lithium storage. The pores serve as the primary region for lithium storage, with the silicon material present on the wall surfaces of the pores. The silicon material, as a lithiophilic substance, can induce lithium to enter the pores of the core from the external shell layer of the negative electrode material, enabling deposition position to be controlled during lithium metal deposition, reducing non-uniform lithium metal deposition, and thereby helping improve the specific capacity and cycling performance of lithium-ion batteries.

Further, in the above negative electrode material, the shell layer encapsulates the core surface, sealing the pores and transforming the pores into closed pores, preventing external electrolyte from entering the internal pores, thereby allowing lithium to enter the pores after desolvation.

Further, the silicon material is present on the wall surfaces of the pores, and while the pores store metallic lithium, some space may be reserved to buffer volume expansion caused by lithium metal, thereby improving cycling performance.

In some optional embodiments, a thickness of the silicon material is 0.5 nm to 4 nm.

In the above technical solution, setting the thickness of the silicon material within the above range helps more lithium to pass through the shell layer into the pores while suppressing lithium precipitation on the surface of the negative electrode material, thereby achieving a higher specific capacity.

In some optional embodiments, a mass percentage of the silicon material accounts for 0.01% to 20% of a total mass of the negative electrode material. Optionally, the mass percentage of the silicon material accounts for 0.01% to 4% of the total mass of the negative electrode material.

In the above technical solution, setting the mass percentage of the silicon material in the total mass of the negative electrode material within the above range can effectively induce lithium to enter the pores of the core from the external shell layer of the negative electrode material while ensuring good cycling stability of the entire negative electrode material.

In some optional embodiments, an area ratio of the silicon material to the porous carbon is 0.01 to 0.3.

The area ratio of the silicon material to the porous carbon reflects the degree of lithiophilicity of the silicon material. This area ratio should not be too high, as an excessively high ratio may reduce the overall energy density or cycling performance of the material. In the above technical solution, setting the area ratio of the silicon material to the porous carbon to 0.01 to 0.3 is beneficial to the overall energy density or cycling performance of the material.

In some optional embodiments, an area ratio of the pores to the porous carbon is 0.3 to 3.

The area ratio of the pores to the porous carbon indirectly reflects the internal porosity of the material. As the pores serve as the primary region for lithium storage, this area ratio directly affects the capacity and energy density of the material; a higher area ratio results in higher material capacity. However, if the area ratio is too high, the compacted density of the material becomes too low, which is detrimental to improving energy density. Therefore, in the above technical solution, setting the area ratio of the pores to the porous carbon to 0.3 to 3 can enhance the energy density.

In some optional embodiments, a method for measuring the area ratio is as follows: acquiring and observing images of a negative electrode material using a transmission electron microscope, then using image analysis software ImageJ to randomly mark 10 negative electrode material particles in the images; identifying and classifying region 1, region 2, and region 3 for each particle, calculating areas of region 1, region 2, and region 3 using the software, and calculating an area ratio of region 2 to region 1, denoted as A1; or calculating an area ratio of region 3 to region 1, denoted as A2; then taking an average of the 10 A1 values corresponding to the 10 negative electrode material particles as the area ratio of the silicon material to the carbon material; and
taking the average of the 10 A2 values corresponding to the 10 negative electrode material particles as the area ratio of the pores to the carbon material;
where region 1 is the carbon material; region 2 is the silicon material; and region 3 is the pores.

In some optional embodiments, the silicon material includes at least one of silicon or silicon carbide.

Silicon carbide, as a lithiophilic substance, can effectively induce lithium to enter the pores of the core from the shell layer of the negative electrode material, thereby helping improve the specific capacity and cycling performance of lithium-ion batteries.

Silicon, as a lithiophilic substance and a lithium storage material, can not only effectively induce lithium to enter the pores of the core from the shell layer of the negative electrode material but also further increase the specific capacity of lithium-ion batteries.

In some optional embodiments, a thickness of the shell layer is 2 nm to 20 nm.

The thickness of the shell layer should not be too large, as an excessively high energy barrier for lithium diffusion through the shell layer may cause lithium to nucleate and grow directly on the surface of the negative electrode material, which could increase the probability of thermal runaway; while a shell layer that is too thin cannot achieve effective encapsulation. In the above technical solution, setting the thickness of the silicon material to 0.5 nm to 4 nm allows lithium to diffuse through the shell layer while effectively encapsulating the core and sealing the pores.

In some optional embodiments, the core satisfies at least one of the following characteristics:
(a) a specific surface area of the porous carbon is 500 m²/g to 3000 m²/g;
(b) an average pore diameter of the porous carbon is 1 nm to 30 nm;
(c) a pore volume of the porous carbon is 0.1 cm³/g to 1.5 cm³/g;
(d) a D_{V}50 of the porous carbon is 1 µm to 20 µm;
(e) a d002 of the porous carbon is 0.38 nm to 0.41 nm; or
(f) a pore diameter of the porous carbon is 2 nm to 40 nm.

Porous carbon materials can have pores shaped as slits, cones, cylinders, spheres, or irregular forms. The pore diameter in the above technical solution is defined as the distance between two farthest points on the wall surfaces of the pores. An excessively small pore diameter enhances the inductive effect of the silicon material on lithium diffusion but reduces the overall lithium storage capacity. Conversely, when the pore diameter is too large, the inductive effect of the silicon material farther from the pore opening is weakened. When the energy barrier for lithium diffusion through the shell layer of the negative electrode material is higher than that for nucleation and growth on the particle surface, lithium metal deposits on the particle surface instead of within the pores, leading to non-uniform lithium deposition, rapid capacity decay, and potentially increasing the probability of thermal runaway.

The average pore diameter of the porous carbon should not be too large or too small, as an excessively large diameter is not conducive to the introduction of the silicon material. In the above technical solution, setting the average pore diameter of the porous carbon within the above range facilitates the introduction of the silicon material.

The d002 of the porous carbon represents the interlayer spacing of the carbon layers. A larger interlayer spacing is beneficial to lithium-ion transport and diffusion, benefiting the rate performance and low-temperature performance of the final battery. In the above technical solution, setting the d002 of the porous carbon within the above range is beneficial to the rate performance and low-temperature performance of the battery.

In some optional embodiments, the negative electrode material satisfies the following characteristics:
(g) a pore diameter of the negative electrode material is 3 nm to 30 nm;
(h) a pore volume of the negative electrode material is 0.005 cm³/g to 0.06 cm³/g;
(i) an average pore diameter of the negative electrode material is 0.01 nm to 5 nm; and
(j) a D_{V}50 of the negative electrode material is 1 µm to 20 µm.

In the above technical solution, setting the pore diameter of the negative electrode material to 3 nm to 30 nm can effectively increase the overall lithium storage capacity of the negative electrode material, and promote uniform lithium metal deposition, benefiting cycling stability.

According to a second aspect, an embodiment of the present application provides a negative electrode plate, where the negative electrode plate includes the negative electrode material according to the first aspect.

According to a third aspect, an embodiment of the present application provides an electrochemical apparatus, where the electrochemical apparatus includes the negative electrode plate according to the second aspect.

According to a fourth aspect, an embodiment of the present application provides an electric device, where the electric device includes the electrochemical apparatus according to the third aspect.

### BRIEF DESCRIPTION OF DRAWINGS

To more clearly illustrate the technical solutions of the embodiments of the present application, the drawings required for use in the embodiments are briefly introduced below. It should be understood that the following drawings only show certain embodiments of the present application and should not be considered as limiting the scope. For those of ordinary skill in the art, other related drawings can be obtained based on these drawings without creative effort.
FIG. 1 schematically shows a cross-sectional structural diagram of a negative electrode material;
FIG. 2 schematically shows a TEM image of the negative electrode material according to Example 1 of the present application;
FIG. 3 schematically shows a nitrogen adsorption-desorption curve of the negative electrode material according to Example 1 of the present application;
FIG. 4 schematically shows a pore size distribution diagram of the negative electrode material according to Example 1 of the present application;
FIG. 5 schematically shows a pore size distribution diagram of porous carbon-1 used according to an embodiment of the present application;
FIG. 6 schematically shows a specific capacity curve of a lithium-ion battery according to Example 1 of the present application; and
FIG. 7 schematically shows a cycling performance diagram of a lithium-ion battery according to Example 1 of the present application.

### DETAILED DESCRIPTION

The embodiments of the technical solutions of the present application will be described in detail below with reference to the accompanying drawings. The following embodiments are only used to more clearly illustrate the technical solutions of the present application and thus serve as examples, not to limit the scope of protection of the present application.

Unless otherwise defined, all technical and scientific terms used herein have the same meaning as commonly understood by those skilled in the technical field of the present application; the terms used herein are for the purpose of describing specific embodiments only and are not intended to limit the present application; the terms "comprising" and "having" and any variations thereof in the specification, claims, and descriptions of the drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or primary-secondary relationship of the technical features indicated.

In the description of the embodiments of the present application, technical terms such as "inner" and "outer" indicating orientation or positional relationships are based on the orientation or positional relationships shown in the drawings, only for the convenience of describing the embodiments of the present application and simplifying the description, and do not indicate or imply that the referred device or element must have a specific orientation, be constructed, or operate in a specific orientation, and thus should not be construed as limiting the embodiments of the present application.

In the description of the embodiments of the present application, unless otherwise explicitly specified and limited, technical terms such as "installed," "connected," "connection," and "fixed" should be broadly understood, for example, as fixed connections, detachable connections, or integral formations; they can be direct connections or indirect connections through an intermediary. For those of ordinary skill in the art, the specific meanings of the above terms in the embodiments of the present application can be understood based on specific circumstances.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the embodiments of the present application, the same reference numerals denote the same components, and for brevity, detailed descriptions of the same components are omitted in different embodiments. It should be understood that the dimensions such as height, length, and width of various components in the embodiments of the present application shown in the drawings, as well as the overall height, length, and width of an integrated device, are for illustrative purposes only and should not constitute any limitation to the present application.

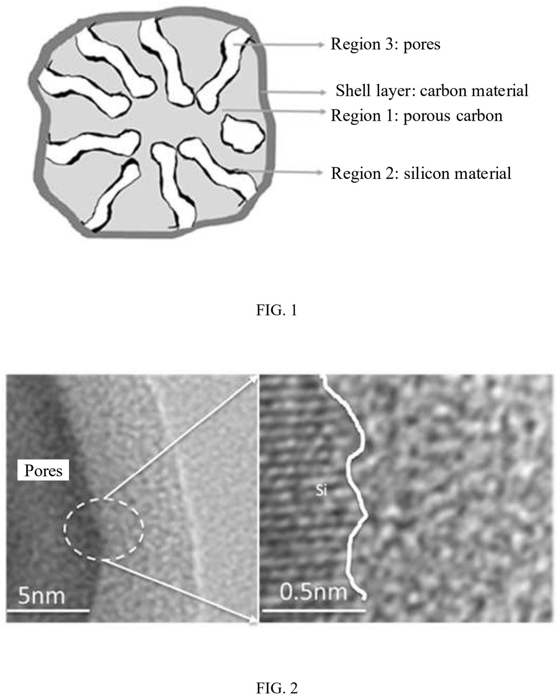

Referring to FIG. 1 and FIG. 2, some embodiments of the present application provide a negative electrode material, where the negative electrode material includes a core and a shell layer;
the core is porous carbon with pores;
a silicon material is present on wall surfaces of the pores; and
the shell layer is a carbon material, and the shell layer encapsulates the core surface, sealing the pores.

In the above negative electrode material, the porous carbon and the carbon material of the shell layer have a disordered structure, resulting in less lithium storage. The pores serve as the primary region for lithium storage, with the silicon material present on the wall surfaces of the pores. The silicon material, as a lithiophilic substance, can induce lithium to enter the pores of the core from the external shell layer of the negative electrode material, enabling deposition position to be controlled during lithium metal deposition, reducing non-uniform lithium metal deposition, and thereby helping improve the specific capacity and cycling performance of lithium-ion batteries. In addition, in the above negative electrode material, the shell layer encapsulates the core surface and transforming the pores into closed pores, preventing external electrolyte from entering the internal pores, thereby allowing lithium to enter the pores after desolvation. Further, the silicon material is present on the wall surfaces of the pores, and while the pores store metallic lithium, some space may be reserved to buffer volume expansion caused by lithium metal, thereby improving cycling performance.

It should be understood that in the above technical solution, the silicon material is present on the wall surfaces of the pores, meaning that the silicon material exists only on the wall surfaces of the pores, with the remaining space in the pores serving as lithium storage space. In the above technical solution, the core has pores on its surface; or the core has pores both on its surface and throughout its interior.

In some embodiments of the present application, the negative electrode material of the present application may exhibit a core-shell structure, where the above shell layer is the shell.

Further, in some embodiments of the present application, a thickness of the silicon material is 0.5 nm to 4 nm. The thickness of the silicon material is defined as the largest thickness of the silicon material at all positions on the wall surfaces of the pores. In the above technical solution, setting the thickness of the silicon material within the above range helps more lithium to pass through the shell layer into the pores while suppressing lithium precipitation on the surface of the negative electrode material, thereby achieving a higher specific capacity.

Further, in some embodiments of the present application, a method for measuring the thickness of the silicon material is as follows: embedding and curing the negative electrode active material with epoxy resin, then using an ultrathin slicing method to cut the material into slices of 50 nm to 70 nm to prepare samples; observing cross-sections of particle samples using a high-magnification transmission electron microscope to examine pore regions and disordered carbon layer regions, where a region between the pore region and the disordered carbon layer region is the silicon material, and the outermost disordered portion of the entire particle is the carbon shell; performing processing using software ImageJ; acquiring and observing images of the material using the TEM, then using the image analysis software ImageJ to randomly mark 10 negative electrode material particles in the images, and measuring the thickness of the silicon material contained in the pore inner walls of these negative electrode material particle, where the largest thickness of the 10 material particles is taken as the thickness of the silicon material.

Further, in some embodiments of the present application, the thickness of the silicon material is 0.6 nm to 3.9 nm. For example, in some embodiments of the present application, the thickness of the silicon material is 0.8 nm, 1.0 nm, 1.2 nm, 1.5 nm, 1.8 nm, 2.0 nm, 2.5 nm, 2.8 nm, 3.0 nm, 3.5 nm, or 3.8 nm.

Further, in some embodiments of the present application, a mass percentage of the silicon material accounts for 0.01 % to 20% of a total mass of the negative electrode material. In the above technical solution, setting the mass percentage of the silicon material to 0.01% to 20% can effectively induce lithium to enter the pores of the core from the external shell layer of the negative electrode material while ensuring good cycling stability of the entire negative electrode material.

Further, optionally, in some embodiments of the present application, the mass percentage of the silicon material accounts for 0.01% to 4% of the total mass of the negative electrode material.

As an example, in some embodiments of the present application, the mass percentage of the silicon material accounts for 0.03%, 0.05%, 0.1%, 0.5%, 1%, 2%, 3%, 5%, 8%, 10%, 15%, or 18% of the total mass of the negative electrode material.

Further, in some embodiments of the present application, an area ratio of the silicon material to the porous carbon is 0.01 to 0.3. The area ratio of the silicon material to the porous carbon reflects the degree of lithiophilicity of the silicon material. This area ratio should not be too high, as an excessively high ratio may reduce the overall energy density or cycling performance of the material. In the above technical solution, setting the area ratio of the silicon material to the porous carbon to 0.01 to 0.3 is beneficial to the overall energy density or cycling performance of the material.

Further, in some embodiments of the present application, a method for measuring the area ratio of the silicon material to the porous carbon is as follows: embedding and curing the negative electrode active material with epoxy resin, then using an ultrathin slicing method to cut the material into slices of 50 nm to 70 nm to prepare samples; observing cross-sections of particle samples using a high-magnification transmission electron microscope to examine pore regions and disordered carbon layer regions, where the pore regions and the disordered carbon layer regions constitute the core, and the outermost disordered portion of the entire core is the carbon shell; performing processing using software ImageJ; acquiring and observing images of the negative electrode material using the transmission electron microscope, then using the image analysis software ImageJ to randomly mark 10 negative electrode material particles in the images; identifying and classifying region 1, region 2, and region 3 for each particle, calculating areas of region 1, region 2, and region 3 using the software, and calculating an area ratio of region 2 to region 1, denoted as A1; then taking the average of the 10 A1 values corresponding to the 10 negative electrode material particles as the area ratio of the silicon material to the carbon material; where region 1 is the carbon material; region 2 is the silicon material; and region 3 is the pores.

Further, optionally, in some embodiments of the present application, the area ratio of the silicon material to the porous carbon is 0.01 to 0.29. As an example, in some embodiments of the present application, the area ratio of the silicon material to the porous carbon is 0.02, 0.05, 0.08, 0.10, 0.12, 0.15, 0.20, 0.25, or 0.28.

Further, in some embodiments of the present application, the area ratio of the pores to the porous carbon is 0.3 to 3. The area ratio of the pores to the porous carbon indirectly reflects the internal porosity of the material. As the pores serve as the primary region for lithium storage, this area ratio directly affects the capacity and energy density of the material; a higher area ratio results in higher material capacity. However, if the area ratio is too high, the compacted density of the material becomes too low, which is detrimental to improving energy density. Therefore, in the above technical solution, setting the area ratio of the pores to the porous carbon to 0.3 to 3 can enhance the energy density.

Further, in some embodiments of the present application, a method for measuring the area ratio of the pores to the porous carbon is as follows: embedding and curing the negative electrode active material with epoxy resin, then using an ultrathin slicing method to cut the material into slices of 50 nm to 70 nm to prepare samples; observing cross-sections of particle samples using a high-magnification transmission electron microscope to examine pore regions and disordered carbon layer regions, where the pore regions and the disordered carbon layer regions constitute the core, and the outermost disordered portion of the entire core is the carbon shell; acquiring and observing images of the negative electrode material using the transmission electron microscope, then using the image analysis software ImageJ to randomly mark 10 negative electrode material particles in the images, identifying and classifying region 1, region 2, and region 3 for each particle, calculating areas of region 1, region 2, and region 3 using the software, and calculating an area ratio of region 3 to region 1, denoted as A2; then taking the average of the 10 A2 values corresponding to the 10 negative electrode material particles as the area ratio of the pores to the carbon material; where region 1 is the carbon material; region 2 is the silicon material; and region 3 is the pores.

Further, optionally, in some embodiments of the present application, the area ratio of the pores to the porous carbon is 0.31 to 3. For example, in some embodiments of the present application, the area ratio of the pores to the porous carbon is 0.31, 0.35, 0.38, 0.40, 0.45, 0.50, 0.80, 1.00, 1.50, 2.00, 2.50, or 2.80.

Further, in some embodiments of the present application, a D_{V}50 of the silicon material is 0.1 nm to 10 nm. D_{V}50 indicates that particles smaller than this particle size account for 50% of a total volume of the silicon material. In the above technical solution, setting the D_{V}50 of the silicon material to 0.1 nm to 10 nm results in a moderate particle size and specific surface area, which is beneficial to the specific capacity and cycling performance of lithium-ion batteries.

Further, in some embodiments of the present application, a method for measuring the D_{V}50 of the silicon material is in accordance with GB/T 19077-2016. The specific procedure is as follows: weighing 1 g of the sample and mixing it well with 20 mL of deionized water and a trace amount of dispersant; subjecting a resulting mixture to ultrasonication for 5 minutes using an ultrasonic device, then pouring the solution into the Hydro 2000SM injection system for measurement, with the Mastersizer 3000 manufactured by Malvern as the measurement instrument; during the measurement, measuring the particle size by measuring the intensity of the scattered light as the laser beam passes through the dispersed particle sample; then using resulting data to analyze and calculate the particle size distribution corresponding to particles that form the scattering spectrum; and with the refractive index of the particles used during the measurement being 1.8, performing measurements for each sample three times, and determining the final Dv50 value as the average of the three measurements, where D_{V}50 indicates that particles smaller than this particle size account for 50% of a total sample volume.

Further, optionally, in some embodiments of the present application, the D_{V}50 of the silicon material is 0.11 nm to 9.9 nm. For example, in some embodiments of the present application, the D_{V}50 of the silicon material is 0.15 nm, 0.2 nm, 0.5 nm, 1.0 nm, 2.0 nm, 3.0 nm, 4.0 nm, 5.0 nm, 6.0 nm, 7.0 nm, or 8.0 nm.

Further, in some embodiments of the present application, the silicon material includes at least one of elemental silicon or silicon carbide. Silicon carbide, as a lithiophilic substance, can effectively induce lithium to enter the pores of the core from the shell layer of the negative electrode material, thereby helping improve the specific capacity and cycling performance of lithium-ion batteries. Silicon, as a lithiophilic substance and a lithium storage material, can not only effectively induce lithium to enter the pores of the core from the shell layer of the negative electrode material but also further increase the specific capacity of lithium-ion batteries.

Further, in some embodiments of the present application, a thickness of the shell layer is 2 nm to 20 nm. The thickness of the shell layer should not be too large, as an excessively high energy barrier for lithium diffusion through the shell layer may cause lithium to nucleate and grow directly on the surface of the negative electrode material, which could increase the probability of thermal runaway; while a shell layer that is too thin cannot achieve effective encapsulation. In the above technical solution, setting the thickness of the silicon material to 0.5 nm to 4 nm allows lithium to diffuse through the shell layer while effectively encapsulating the core and sealing the pores.

In some embodiments of the present application, a method for measuring the thickness of the shell layer is as follows: embedding and curing the negative electrode active material with epoxy resin, then using an ultrathin slicing method to cut the material into slices of 50 nm to 70 nm to prepare samples; observing cross-sections of particle samples using a high-magnification transmission electron microscope to examine pore regions and disordered carbon layer regions; where the pore regions and the disordered carbon layer regions constitute the core, and the outermost disordered portion of the entire particle is the carbon shell; acquiring and observing images of the material using the TEM, then using the image analysis software ImageJ to randomly mark 10 negative electrode material particles in the images, and measuring thicknesses of the outermost disordered portions (shell layer) of these negative electrode particles, and then taking an average thickness of the 10 negative electrode material particles as the thickness of the shell layer.

Further, optionally, in some embodiments of the present application, the thickness of the shell layer is 2.1 nm to 19 nm. For example, in some embodiments of the present application, the thickness of the shell layer is 2.5 nm, 3 nm, 5 nm, 10 nm, 12 nm, 15 nm, or 18 nm.

Further, in some embodiments of the present application, the core (porous carbon) may be selected from at least one of activated carbon, template porous carbon, carbon molecular sieve, carbon nanofibers, carbon nanotubes, and expanded graphite.

Further, in some embodiments of the present application, a pore diameter of the core (porous carbon) is 2 nm to 40 nm; further optionally, the pore diameter of the core (porous carbon) is 5 nm to 35 nm. As an example, the pore diameter of the core (porous carbon) is 10 nm, 15 nm, 20 nm, 25 nm, 30 nm, or 32 nm.

Porous carbon materials can have pores shaped as slits, cones, cylinders, spheres, or irregular forms, so the pore diameter herein is defined as a distance between the two farthest points on the wall surfaces of the pores. An excessively small pore diameter enhances the inductive effect of silicon or silicon carbide particles on lithium diffusion but reduces the overall lithium storage capacity. Conversely, when the pore diameter is too large, the inductive effect of silicon or silicon carbide particles farther from the pore opening is weakened. When the energy barrier for lithium diffusion through the shell of the particle is higher than that for nucleation and growth on the particle surface, lithium metal deposits on the particle surface instead of within the pores, leading to non-uniform lithium deposition, rapid capacity decay, and an increased probability of thermal runaway. Therefore, in the above technical solution, setting the pore diameter of the core (porous carbon) within the above range helps increase lithium storage capacity and promotes uniform lithium deposition.

Further, in some embodiments of the present application, a specific surface area of the core (porous carbon) is 500 m²/g to 3000 m²/g; further optionally, the specific surface area of the core (porous carbon) is 550 m²/g to 2500 m²/g. As an example, the specific surface area of the core (porous carbon) is 600 m²/g, 800 m²/g, 1000 m²/g, 1500 m²/g, 2000 m²/g, or 2300 m²/g. Setting the specific surface area of the core (porous carbon) within the above range is beneficial to the specific capacity and cycling performance of lithium-ion batteries.

Further, in some embodiments of the present application, an average pore diameter of the core (porous carbon) is 1 nm to 30 nm; further optionally, the average pore diameter of the core (porous carbon) is 2 nm to 29 nm. As an example, the average pore diameter of the core (porous carbon) is 3 nm, 5 nm, 10 nm, 15 nm, 20 nm, 25 nm, or 28 nm. The average pore diameter of the porous carbon should not be too large or too small, as an excessively large diameter is not conducive to the introduction of the silicon material. In the above technical solution, setting the average pore diameter of the porous carbon within the above range facilitates the introduction of the silicon material. Further, in some embodiments of the present application, the average pore diameter of the core (porous carbon) is obtained by measurement using nitrogen at 77 K, with the value taken from the BJH desorption average pore diameter.

Further, in some embodiments of the present application, a pore volume of the core (porous carbon) is 0.1 cm³/g to 1.5 cm³/g; further optionally, the pore volume of the core (porous carbon) is 0.2 cm³/g to 1.4 cm³/g; for example, the pore volume of the core (porous carbon) is 0.5 cm³/g, 0.8 cm³/g, 1.0 cm³/g, 1.2 cm³/g, or 1.3 cm³/g. Setting the pore volume of the core (porous carbon) within the above range is beneficial to the specific capacity and cycling performance of lithium-ion batteries. Further, in some embodiments of the present application, the pore volume of the core (porous carbon) is obtained by measurement using nitrogen at 77 K.

Further, in some embodiments of the present application, a D_{V}50 of the core (porous carbon) is 1 µm to 20 µm; further optionally, the D_{V}50 of the core (porous carbon) is 2 µm to 19 µm. As an example, the D_{V}50 of the core (porous carbon) is 5 µm, 10 µm, 12 µm, 15 µm, or 18 µm. Setting the D_{V}50 of the core (porous carbon) within the above range results in a moderate particle size and specific surface area, which is beneficial to the specific capacity and cycling performance of lithium-ion batteries.

It should be noted that the method for measuring the D_{V}50 of the core (porous carbon) herein is the same as the method for measuring the D_{V}50 of the silicon material described above.

Further, in some embodiments of the present application, a d002 of the core (porous carbon) is 0.38 nm to 0.41 nm. The d002 of the core (porous carbon) represents the interlayer spacing of the carbon layers, which affects lithium-ion transport and diffusion, ultimately influencing the rate performance and low-temperature performance of the battery. In the above technical solution, setting the d002 of the core (porous carbon) to 0.38 nm to 0.41 nm is beneficial to the rate performance and low-temperature performance of the battery.

Further, optionally, in some embodiments of the present application, the d002 of the core (porous carbon) is 0.39 nm to 0.40 nm. As an example, in some embodiments of the present application, the d002 of the core (porous carbon) is 0.39 nm, 0.40 nm, or 0.41 nm.

Further, in some embodiments of the present application, a pore diameter of the negative electrode material is 3 nm to 30 nm. Porous carbon materials can have pores shaped as slits, cones, cylinders, spheres, or irregular forms. The pore diameter in the above technical solution is defined as the distance between two farthest points on the wall surfaces of the pores. An excessively small pore diameter enhances the inductive effect of the silicon material on lithium diffusion but reduces the overall lithium storage capacity. Conversely, when the pore diameter is too large, the inductive effect of the silicon material farther from the pore opening is weakened. When the energy barrier for lithium diffusion through the shell layer of the negative electrode material is higher than that for nucleation and growth on the particle surface, lithium metal deposits on the particle surface instead of within the pores, leading to non-uniform lithium deposition, rapid capacity decay, and potentially increasing the probability of thermal runaway. Setting the pore diameter of the negative electrode material to 3 nm to 30 nm can effectively increase the overall lithium storage capacity of the negative electrode material and promote uniform lithium metal deposition, benefiting cycling stability.

Further, optionally, in some embodiments of the present application, the pore diameter of the negative electrode material is 4 nm to 29 nm. As an example, in some embodiments of the present application, the pore diameter of the negative electrode material is 5 nm, 10 nm, 15 nm, 20 nm, 25 nm, or 28 nm.

Further, in some embodiments of the present application, a pore volume of the negative electrode material is 0.005 cm³/g to 0.06 cm³/g. Further, optionally, the pore volume of the negative electrode material is 0.006 cm³/g to 0.06 cm³/g. As an example, the pore volume of the negative electrode material is 0.01 cm³/g, 0.02 cm³/g, 0.03 cm³/g, 0.04 cm³/g, 0.05 cm³/g, or 0.06 cm³/g. Setting the pore volume of the negative electrode material within the above range is beneficial to the specific capacity and cycling performance of lithium-ion batteries. Further, in some embodiments of the present application, the pore volume of the negative electrode material is obtained by measurement using nitrogen at 77 K.

Further, in some embodiments of the present application, an average pore diameter of the negative electrode material is 0.01 nm to 5 nm. Further, optionally, the average pore diameter of the negative electrode material is 0.02 nm to 4.8 nm. As an example, the average pore diameter of the negative electrode material is 0.05 nm, 1 nm, 2 nm, 3 nm, or 4 nm. Setting the average pore diameter of the negative electrode material within the above range is beneficial to the specific capacity and cycling performance of lithium-ion batteries. In some embodiments of the present application, the average pore diameter of the negative electrode material is obtained by measurement using nitrogen at 77 K, with the value taken from the BJH desorption average pore diameter.

Further, in some embodiments of the present application, a D_{V}50 of the negative electrode material is 1 µm to 20 µm. Further, optionally, the D_{V}50 of the negative electrode material is 1.5 µm to 19 µm. As an example, the D_{V}50 of the negative electrode material is 2 µm, 3 µm, 4 µm, 5 µm, 10 µm, 12 µm, 15 µm, or 18 µm. Setting the D_{V}50 of the negative electrode material within the above range results in a moderate particle size and specific surface area, which is beneficial to the specific capacity and cycling performance of lithium-ion batteries.

It should be noted that the method for measuring the D_{V}50 of the negative electrode material herein is the same as the method for measuring the D_{V}50 of the silicon material described above.

Further, in some embodiments of the present application, the negative electrode material can be prepared according to the method described below.

Step S1: Place porous carbon powder in a CVD device, introduce a protective gas, and heat to a target temperature T1 at a specific heating rate.

Further, in some embodiments of the present application, in Step S1, the heating rate may be 1-20°C/min, and the target temperature T1 may be 300-600°C.

Step S2: Introduce a silicon-containing gas for chemical vapor deposition at the target temperature T1 for 0.1 h to 1 h, then introduce nitrogen to purge the furnace for 0.2 h, and then introduce the silicon-containing gas again. Cyclically and alternately repeat the processes of chemical vapor deposition and purging 1 to 20 times to obtain a precursor of the negative electrode material.

Further, in some embodiments of the present application, in Step S2, the silicon-containing gas may be a mixture of silane and argon, with a mass concentration of silane of 0.2% to 10%.

Further, in some embodiments of the present application, in Step S2, the silicon-containing gas source may be monosilane or disilane; and the flow rate of the silicon-containing gas source may be 10-300 mL/min.

Step S3: Shut off the silicon-containing gas source and introduce a carbon-containing gas source, heat to a target temperature T2 at a specific heating rate, with a constant temperature time of t; then shut off the carbon-containing gas source and naturally cool to room temperature.

Further, in some embodiments of the present application, in Step S3, the carbon-containing gas source may be at least one of methane, ethane, propane, ethylene, acetylene, or propyne.

Further, in some embodiments of the present application, in Step S3, the heating rate may be 1-20°C/min, the target temperature T2 may be 800-1200°C, and the constant temperature time t can be 0 to 5 h.

Some embodiments of the present application provide a negative electrode plate, where the negative electrode plate includes the negative electrode material provided in any of the above embodiments.

Further, in some embodiments of the present application, the negative electrode plate includes a current collector and a negative electrode active material layer located on a surface of the current collector, where the negative electrode active material layer includes the negative electrode material provided in any of the above embodiments. In some embodiments, the current collector includes: copper foil, aluminum foil, nickel foil, stainless steel foil, titanium foil, nickel foam, copper foam, a polymer substrate coated with conductive metal, or any combination thereof.

In some embodiments, the negative electrode active material layer further includes a binder, where the binder includes but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylic-modified styrene-butadiene rubber, epoxy resin, or nylon.

In some embodiments, the negative electrode active material layer further includes a conductive agent, where the conductive agent includes but is not limited to: carbon-based materials, metal-based materials, conductive polymers, and mixtures thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The negative electrode plate of the present application may be prepared using methods well-known in the art. Typically, the negative electrode material, along with optional conductive agents (such as carbon materials like carbon black and metal particles), binders (such as SBR), and other optional additives (such as PTC thermistor materials), are mixed together and dispersed in a solvent (such as deionized water). Upon stirring well, a resulting mixture is uniformly applied to a negative electrode current collector, followed by drying to obtain a negative electrode plate. Materials such as metal foil or porous metal plates can be used as the negative electrode current collector.

Some embodiments of the present application provide an electrochemical apparatus, where the electrochemical apparatus includes the negative electrode plate provided in any of the above embodiments.

In some embodiments of the present application, the electrochemical apparatus includes but is not limited to: all types of primary batteries, secondary batteries, or capacitors.

In some embodiments of the present application, the electrochemical apparatus is a lithium secondary battery.

In some embodiments of the present application, the electronic apparatus exhibits excellent electrochemical performance: a discharge specific capacity at a current density of 0.5C can range from 700 mAh/g to 3000 mAh/g, and an energy retention rate at a current density of 1C can be as high as 85% to 94%.

Further, in some embodiments of the present application, the electrochemical apparatus includes the negative electrode plate provided in any of the above embodiments; as well as a positive electrode plate, an electrolyte, and a separator.

The positive electrode plate includes a current collector and a positive electrode active material layer located on the current collector. In some embodiments of the present application, the positive electrode active material includes a positive electrode material capable of absorbing and releasing lithium. Positive electrode materials capable of releasing lithium include but are not limited to lithium cobalt oxide, lithium nickel cobalt manganese oxide, lithium nickel cobalt aluminum oxide, lithium manganese oxide, lithium iron manganese phosphate, lithium vanadium phosphate, lithium vanadium oxide phosphate, lithium iron phosphate, lithium titanate, and lithium-rich manganese-based materials. In some embodiments of the present application, the current collector may include but is not limited to aluminum foil.

In some embodiments of the present application, the positive electrode active material layer further includes a binder and, optionally includes a conductive material. The binder enhances the bonding between positive electrode active material particles and between the positive electrode active material and the current collector.

In some embodiments of the present application, the binder includes but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon.

In some embodiments of the present application, the conductive material includes but is not limited to: carbon-based materials, metal-based materials, conductive polymers, and mixtures thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The positive electrode plate may be prepared using preparation methods well-known in the art. For example, the positive electrode plate may be obtained by the following method: mixing an active material, a conductive material, and a binder in a solvent to prepare an active material composition, and applying the active material composition to a current collector. In some embodiments, the solvent may include but is not limited to N-methylpyrrolidone. The electrochemical apparatus of the present application has higher energy density and cycling performance, meeting application requirements.

Further, in some embodiments of the present application, the separator may include a substrate layer and a surface treatment layer. The substrate layer is a non-woven fabric, film, or composite film with a porous structure, and the material of the substrate layer is selected from at least one of polyethylene, polypropylene, polyethylene terephthalate, and polyimide. Specifically, a polypropylene porous film, a polyethylene porous film, a polypropylene non-woven fabric, a polyethylene non-woven fabric, or a polypropylene-polyethylene-polypropylene porous composite film may be selected.

A surface treatment layer is provided on at least one surface of the substrate layer, where the surface treatment layer may be a polymer layer or an inorganic layer, or a layer formed by mixing a polymer and an inorganic substance. The inorganic layer includes inorganic particles and a binder, where the inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from at least one of polyvinylidene fluoride, a copolymer of vinylidene fluoride-hexafluoropropylene, polyamide, polyacrylonitrile, polyacrylate, polyacrylic acid, polyacrylate salt, polyvinylpyrrolidone, polyethylene oxide, polymethyl methacrylate, polytetrafluoroethylene, and polyhexafluoropropylene. The polymer layer includes a polymer, where the material of the polymer is selected from at least one of polyamide, polyacrylonitrile, acrylate polymer, polyacrylic acid, polyacrylate salt, polyvinylpyrrolidone, polyethylene oxide, polyvinylidene fluoride, and poly(vinylidene fluoride-hexafluoropropylene).

Further, in some embodiments of the present application, the electrolyte may further include a non-aqueous solvent. The non-aqueous solvent may be a carbonate compound, a carboxylate compound, an ether compound, or a combination thereof.

The carbonate compound may be a chain carbonate compound, a cyclic carbonate compound, a fluorinated carbonate compound, or a combination thereof. Examples of the chain carbonate compound include diethyl carbonate (DEC), dimethyl carbonate (DMC), dipropyl carbonate (DPC), methyl propyl carbonate (MPC), ethyl propyl carbonate (EPC), methyl ethyl carbonate (MEC), or combinations thereof. Examples of the cyclic carbonate compound include ethylene carbonate (EC), propylene carbonate (PC), butylene carbonate (BC), vinyl ethylene carbonate (VEC), or combinations thereof. Examples of the fluorinated carbonate compound include fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or combinations thereof. Examples of the carboxylate compound include methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or combinations thereof. Examples of the ether compound include dibutyl ether, tetraglyme, diglyme, 1,2-dimethoxyethane, 1,2-diethoxyethane, ethoxymethoxyethane, 2-methyltetrahydrofuran, tetrahydrofuran, or combinations thereof.

Some embodiments of the present application provide an electric device, where the electric device includes the electrochemical apparatus provided in any of the above embodiments.

The following lists some specific examples to better illustrate the present application.

### Preparation of negative electrode material

### Example 1

A negative electrode material was provided and prepared according to the following steps:
(1) place commercially available porous carbon-1 into a CVD device, introduce nitrogen gas, and heat to 435°C at a heating rate of 5°C/min;
(2) shut off the nitrogen gas, introduce a silicon-containing gas source for chemical vapor deposition for 0.3 h, then introduce nitrogen to purge the furnace for 0.2 h and introduce a 0.7% silicon source gas again. Cyclically and alternately repeat the processes of chemical vapor deposition and purging 3 times to obtain a precursor of the negative electrode material; and
(3) Shut off the silicon-containing gas source and introduce a carbon-containing gas source, heat to 850°C at a heating rate of 5°C/min, with a constant temperature time of 1 h; then shut off the carbon-containing gas source and naturally cool to room temperature to obtain the negative electrode material.

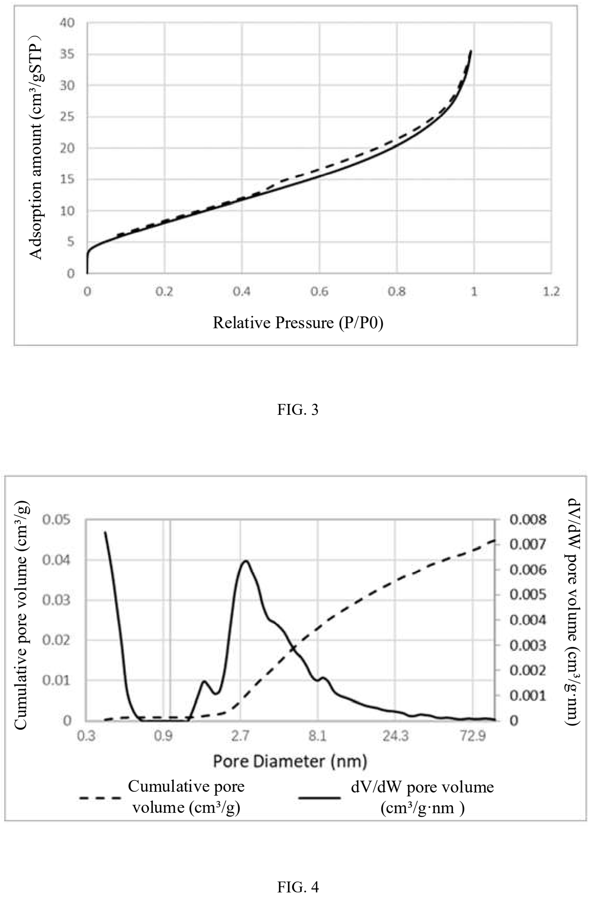

The pore size distribution curve of the porous carbon-1 used in step (1) of Example 1 was shown in FIG. 4. It can be seen that porous carbon-1 had micropores and mesopores, with an average pore diameter of 3.69 nm, a pore volume of 0.63 cm³/g, and a specific surface area of 1730 m²/g.

The nitrogen adsorption-desorption curve of the negative electrode material obtained in Example 1 was shown in FIG. 3. It can be seen that the adsorption amount of the porous carbon-1 became extremely small after the above steps, indicating that nitrogen cannot enter the pores and that most pores had become closed pores.

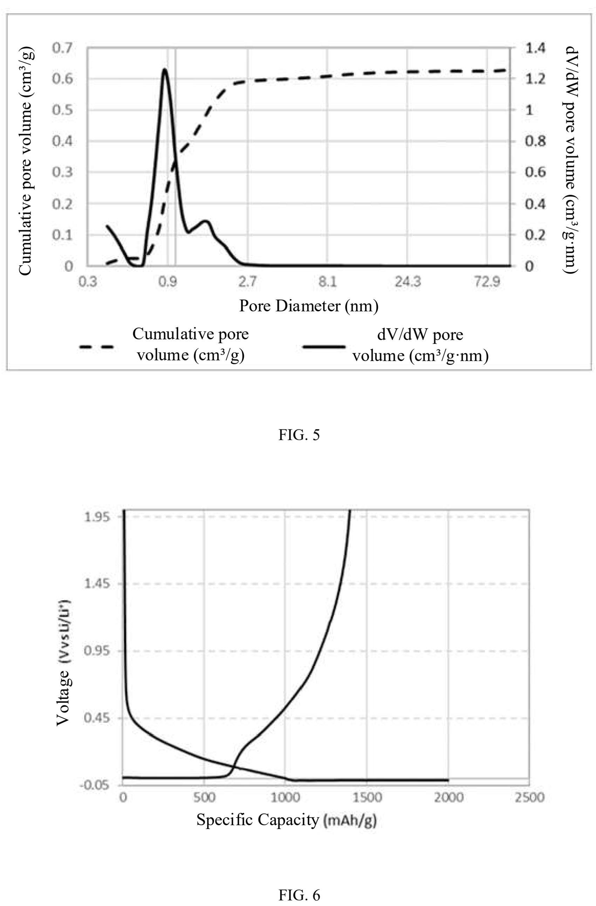

The pore size distribution curve of the negative electrode material obtained in Example 1 was shown in FIG. 5. It can be seen that the negative electrode material had both micropores and mesopores, with an average pore diameter of 5.8 nm, a pore volume of 0.046 cm³/g, and a specific surface area of 33.3 m²/g. Thus, the BET and pore volume of porous carbon-1 after CVD coating became extremely small, indicating that most internal pores had become closed pores.

### Example 2

A negative electrode material was provided, with preparation steps substantially the same as those in Example 1, except that:
in step (1), the temperature was raised to 455°C; and
in step (2), the processes of chemical vapor deposition and purging were cyclically and alternately repeated 4 times.

### Example 3

A negative electrode material was provided, with preparation steps substantially the same as those in Example 1, except that:
in step (1), the temperature was raised to 485°C; and
in step (2), the processes of chemical vapor deposition and purging were cyclically and alternately repeated 5 times.

### Example 4

A negative electrode material was provided, with preparation steps substantially the same as those in Example 1, except that:
in step (1), the temperature was raised to 485°C;
in step (2), the processes of chemical vapor deposition and purging were cyclically and alternately repeated 5 times; and
in step (3), a constant temperature was maintained for 1.5 h.

### Example 5

A negative electrode material was provided, with preparation steps substantially the same as those in Example 1, except that:
in step (1), the temperature was raised to 485°C;
in step (2), the processes of chemical vapor deposition and purging were cyclically and alternately repeated 5 times; and
in step (3), a constant temperature was maintained for 2 h.

### Example 6

A negative electrode material was provided, with preparation steps substantially the same as those in Example 1, except that:
in step (1), the temperature was raised to 455°C;
in step (2), the processes of chemical vapor deposition and purging were cyclically and alternately repeated 4 times; and
in step (3), the temperature was raised to 1050°C at a heating rate of 5°C/min.

### Example 7

A negative electrode material was provided, with preparation steps substantially the same as those in Example 1, except that:
in step (1), the temperature was raised to 455°C;
in step (2), the processes of chemical vapor deposition and purging were cyclically and alternately repeated 4 times; and
in step (3), the temperature was raised to 1050°C at a heating rate of 5°C/min, and a constant temperature was maintained for 2 h.

### Example 8

A negative electrode material was provided, with preparation steps substantially the same as those in Example 1, except that:
in step (1), porous carbon-2 was used, and the temperature was raised to 485°C;
in step (2), a 1.5% silicon source gas was introduced, and the processes of chemical vapor deposition and purging were cyclically and alternately repeated 5 times; and
in step (3), a constant temperature was maintained for 2 h.

### Example 9

A negative electrode material was provided, with preparation steps substantially the same as those in Example 1, except that:
in step (1), porous carbon-2 was used, and the temperature was raised to 485°C;
in step (2), a 1.5% silicon source gas was introduced, and the processes of chemical vapor deposition and purging were cyclically and alternately repeated 5 times; and
in step (3), the temperature was raised to 1050°C at a heating rate of 5°C/min, and a constant temperature was maintained for 2 h.

### Example 10

A negative electrode material was provided, with preparation steps substantially the same as those in Example 1, except that:
in step (1), porous carbon-2 was used, and the temperature was raised to 485°C;
in step (2), a 1.5% silicon source gas was introduced, and the processes of chemical vapor deposition and purging were cyclically and alternately repeated 6 times; and
in step (3), the temperature was raised to 1050°C at a heating rate of 5°C/min, and a constant temperature was maintained for 2 h.

### Example 11

A negative electrode material was provided, with preparation steps substantially the same as those in Example 1, except that:
in step (1), porous carbon-3 was used, and the temperature was raised to 485°C;
in step (2), the processes of chemical vapor deposition and purging were cyclically and alternately repeated 5 times; and
in step (3), a constant temperature was maintained for 2 h.

### Example 12

A negative electrode material was provided, with preparation steps substantially the same as those in Example 1, except that:
in step (1), the temperature was raised to 485°C;
in step (2), the processes of chemical vapor deposition and purging were cyclically and alternately repeated 35 times; and
in step (3), a constant temperature was maintained for 2 h.

### Example 13

A negative electrode material was provided, with preparation steps substantially the same as those in Example 1, except that:
in step (1), porous carbon-2 was used, and the temperature was raised to 485°C;
in step (2), a 1.5% silicon source gas was introduced, and the processes of chemical vapor deposition and purging were cyclically and alternately repeated 5 times; and
in step (3), a constant temperature was maintained for 8 h.

### Comparative Example 1

A negative electrode material was provided, which was the porous carbon-1 used in Example 1.

### Comparative Example 2

A negative electrode material was provided, with preparation steps substantially the same as those in Example 1, except that step (3) was omitted.

### Performance Testing

The performance of the negative electrode materials prepared in each example and comparative example was tested.

### 1. TEM characterization

The negative electrode active material was embedded and cured in epoxy resin, and then the material was cut into slices of 50 nm to 70 nm using an ultrathin slicing method to prepare samples. Particle sample cross-sections were observed using a high-magnification transmission electron microscope, and the pore region and the disordered carbon layer region were identified. The region between the pore region and the disordered carbon layer region was identified as the silicon material, and the outermost disordered portion of the entire particle was identified as the carbon shell. Processing was performed using the software ImageJ.

FIG. 2 shows an TEM image of the negative electrode material of Example 1 as an example.

### (1) Thickness of silicon material

Images of the material were captured and observed using TEM, and then the image analysis software ImageJ was used to randomly mark 10 negative electrode material particles in the images. The thickness of the silicon material contained in the pore inner walls of these negative electrode material particles was measured, and the largest thickness of the 10 material particles was taken as the thickness of the silicon material.

### (2) Area ratio

Images of the negative electrode material were acquired and observed using a transmission electron microscope, and then the image analysis software ImageJ was used to randomly mark 10 negative electrode material particles in the images. Region 1, region 2, and region 3 for each particle were identified and classified. The areas of region 1, region 2, and region 3 were calculated using the software, and an area ratio of region 2 to region 1 was calculated, denoted as A1; or an area ratio of region 3 to region 1 was calculated, denoted as A2. Then, an average of the 10 A1 values corresponding to the 10 negative electrode material particles was taken as the area ratio of the silicon material to the carbon material.

The average of the 10 A2 values corresponding to the 10 negative electrode material particles was taken as the area ratio of the pores to the carbon material;
where region 1 was the carbon material; region 2 was the silicon material; and region 3 was the pores.

### 2. Pore diameter

The sample preparation process for negative electrode ion milling (cross-section) was as follows: The negative electrode plate was cut to a size of 0.5 cm × 1 cm, and the cut negative electrode plate was attached to a silicon wafer carrier of 1 cm × 1.5 cm using conductive adhesive; one end of the negative electrode plate was processed using argon ion polishing (parameters: 8 kV acceleration voltage, 4 h per sample), where argon ion polishing utilized a high-voltage electric field to ionize argon gas, generating ionized species, and the generated argon ions bombarded the negative electrode surface at high speed under the action of the acceleration voltage, peeling off the negative electrode plate layer by layer to achieve a polishing effect.

Pore diameter: Images of the material were acquired and observed using FESEM, and 10 material particles were randomly marked in the images. The size of the pores inside the particles was measured by determining a distance between two farthest points on the pore inner wall, and an average of the distances measured inside the 10 material particles was taken as the pore diameter.

### 4. Particle size measurement of negative electrode active material

The method for measuring the particle size was in accordance with GB/T 19077-2016. The specific procedure was as follows: weighing 1 g of the sample and mixing it well with 20 mL of deionized water and a trace amount of dispersant; subjecting a resulting mixture to ultrasonication for 5 minutes using an ultrasonic device, then pouring the solution into the Hydro 2000SM injection system for measurement, with the Mastersizer 3000 manufactured by Malvern as the measurement instrument; during the measurement, measuring the particle size by measuring the intensity of the scattered light as the laser beam passes through the dispersed particle sample; then using resulting data to analyze and calculate the particle size distribution corresponding to particles that form the scattering spectrum; and with the refractive index of the particles used during the measurement being 1.8, performing measurements for each sample three times, and determining the final Dv50 value as the average of the three measurements, where D_{V}50 indicated that particles smaller than this particle size accounted for 50% of a total sample volume.

### 5. Pore size distribution measurement of negative electrode active material

The measurement instrument was the ASAP2460 physical adsorption analyzer. The dried and degassed sample was placed in liquid nitrogen, the adsorption amount of nitrogen was measured at varying test pressures to plot adsorption and desorption isotherms. The pore shape was determined based on the shape of the hysteresis loop, and the pore distribution and pore volume were calculated according to different pore models. The pore size distribution curve for mesopores and macropores was fitted using a BJH model, and the pore size distribution curve for micropores was fitted using a DFT model.

### 6. Preparation of half-cell (button cell)

With metallic lithium as the counter electrode, a lithium sheet with a diameter of 18 mm and a thickness of 0.6 mm, a separator, and a negative electrode plate prepared according to a corresponding example or comparative example (punched into 18 mm-diameter discs) were assembled in sequence, electrolyte was added, and the assembly was encapsulated in a positive and negative coin-type stainless steel shell to obtain a button cell.

Lithium-ion button cell testing: The button cell was discharged at a current density of 50 mA/g for 10 h to 80 h and charged at a current density of 50 mA/g to 2.0 V, and the capacity of the button cell at this point was recorded as the battery specific capacity.

FIG. 6 shows a specific capacity curve of the lithium-ion battery of Example 1.

The rated discharge capacity in Table 2 was calculated as 50 mA/g × discharge time.

### 7. Cycling performance testing of lithium-ion full battery

The positive electrode plate, separator, and negative electrode plate were stacked in sequence, and operations such as winding or folding were performed as needed to obtain an electrode assembly with a wound structure. The electrode assembly was placed in a packaging bag, an electrolyte was injected into the packaging bag, and the bag was sealed to obtain a lithium-ion full battery; alternatively, the positive electrode plate, separator, and negative electrode plate were stacked in sequence, and the four corners of the entire stacked structure were fixed with tape to obtain an electrode assembly with a stacked structure. The electrode assembly was placed in a packaging bag, an electrolyte was injected into the packaging bag, and the bag was sealed to obtain a lithium-ion full battery.

Five lithium-ion full batteries prepared for each comparative example and example were taken, and the average value was calculated. Charging and discharging of the lithium-ion full battery were repeated through the following steps, and the discharge capacity retention rate of the lithium-ion full battery was calculated.

First, in an environment of 25°C, first charging and discharging were performed. Charging was conducted at a constant current of 1C until an upper limit voltage of 4.55 V was reached, then constant-voltage charging was conducted, and constant-current discharging was conducted at a discharge current of 1C until a final voltage of 2 V was reached. This was defined as one cycle. The data for the first cycle and the 500th cycle were recorded. From the first cycle to the 450th cycle, a capacity test was performed at a current of 0.2C every 50 cycles. The specific procedure was as follows: constant-current charging was conducted at a charging current of 0.2C until an upper limit voltage of 4.55 V was reached, then constant-voltage charging was conducted, and constant-current discharging was conducted at a discharge current of 0.2C until a final voltage of 2 V was reached.

The cycle capacity retention rate in Table 2 was calculated as (discharge capacity of the 500th cycle / discharge capacity of the first cycle) × 100%.

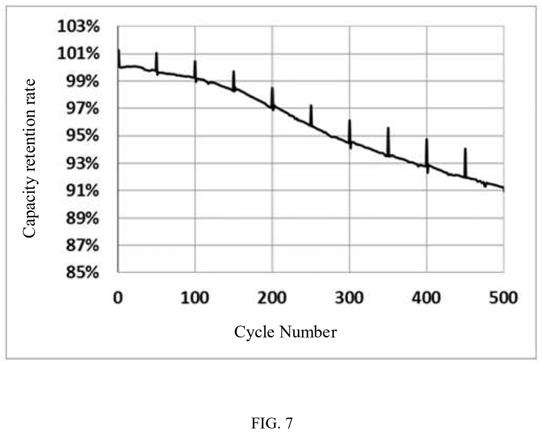

FIG. 7 shows a cycling performance diagram of the lithium-ion battery of Example 1.

### Results

The characteristic parameters and performance parameters of each example and comparative example are shown in Table 1 and Table 2.

**Table 1**

| | Core | Shell layer | Silicon material | Thickness of silicon material (nm) | Mass percentage of silicon material in negative electrode material | Area ratio of silicon material to porous carbon (A1) | Area ratio of pores to porous carbon (A2) | Thickness of shell layer (nm) | Pore diameter of porous carbon (nm) |
|---|---|---|---|---|---|---|---|---|---|
| Example 1 | Porous carbon-1 | Carbon | Si | 0.52 | 0.80% | 0.05 | 0.72 | 5.2 | 16.8 |
| Example 2 | Porous carbon-1 | Carbon | Si | 0.86 | 0.90% | 0.08 | 0.68 | 5.2 | 16.8 |
| Example 3 | Porous carbon-1 | Carbon | Si | 1.25 | 1.52% | 0.13 | 0.64 | 5.2 | 16.8 |
| Example 4 | Porous carbon-1 | Carbon | Si | 1.25 | 1.52% | 0.13 | 0.64 | 8.6 | 16.8 |
| Example 5 | Porous carbon-1 | Carbon | Si | 1.25 | 1.52% | 0.13 | 0.64 | 15.1 | 16.8 |
| Example 6 | Porous carbon-1 | Carbon | SiC | 0.86 | 0.90% | 0.08 | 0.68 | 6.2 | 16.8 |
| Example 7 | Porous carbon-1 | Carbon | SiC | 0.86 | 0.90% | 0.08 | 0.68 | 16.8 | 16.8 |
| Example 8 | Porous carbon-2 | Carbon | Si | 2.13 | 1.48% | 0.15 | 0.82 | 12.4 | 28.6 |
| Example 9 | Porous carbon-2 | Carbon | SiC | 2.13 | 1.48% | 0.15 | 0.82 | 12.4 | 28.6 |
| Example 10 | Porous carbon-2 | Carbon | SiC | 3.06 | 1.83% | 0.21 | 0.78 | 12.4 | 28.6 |
| Example 11 | Porous carbon-3 | Carbon | Si | 1.2 | 0.78% | 0.13 | 1.52 | 14.6 | 52 |
| Example 12 | Porous carbon-1 | Carbon | Si | 4.8 | 4.30% | 0.52 | 2.22 | 10.8 | 16.8 |
| Example 13 | Porous carbon-2 | Carbon | Si | 2.13 | 1.48% | 0.15 | 0.82 | 50 | 28.6 |
| Comparative Example 1 | Porous carbon-1 | None | None | None | None | None | 0.8 | None | 16.8 |
| Comparative Example 2 | Porous carbon-1 | None | Si | 0.52 | 0.90% | 0.05 | 0.72 | 5.2 | 16.8 |

**Table 2**

| | Pore diameter of porous carbon (nm) | Specific surface area of porous carbon (m²/g) | Average pore diameter of porous carbon (nm) | Pore volume of porous carbon (cm³/g) | Pore diameter of negative electrode material (nm) | Pore volume of negative electrode material (cm³/g) | Average pore diameter of negative electrode material (nm) | Dᵥ50 of negative electrode material (nm) | Battery specific capacity (mAh/g) | Rated discharge capacity (mAh/g) | Capacity retention rate (%) |
|---|---|---|---|---|---|---|---|---|---|---|---|
| Example 1 | 16.8 | 1730 | 3.69 | 0.63 | 16.3 | 0.053 | 4.2 | 7.2 | 1429 | 2000 | 91.8 |
| Example 2 | 16.8 | 1730 | 3.69 | 0.63 | 16 | 0.052 | 4.3 | 7.2 | 1804 | 2600 | 90.2 |
| Example 3 | 16.8 | 1730 | 3.69 | 0.63 | 15.6 | 0.05 | 4.4 | 7.2 | 2015 | 2800 | 89.3 |
| Example 4 | 16.8 | 1730 | 3.69 | 0.63 | 15.5 | 0.043 | 5.3 | 7.2 | 2013 | 2800 | 90.1 |
| Example 5 | 16.8 | 1730 | 3.69 | 0.63 | 15.1 | 0.035 | 5.8 | 7.2 | 2016 | 2800 | 91.2 |
| Example 6 | 16.8 | 1730 | 3.69 | 0.63 | 16.1 | 0.05 | 4.2 | 7.2 | 1623 | 2300 | 91.8 |
| Example 7 | 16.8 | 1730 | 3.69 | 0.63 | 16.1 | 0.048 | 4.6 | 7.2 | 1626 | 2300 | 93.6 |
| Example 8 | 28.6 | 869 | 8.56 | 0.95 | 26.5 | 0.038 | 6.2 | 5.9 | 2532 | 3500 | 87.5 |
| Example 9 | 28.6 | 869 | 8.56 | 0.95 | 26.4 | 0.038 | 6.1 | 5.9 | 2132 | 3000 | 90.1 |
| Example 10 | 28.6 | 869 | 8.56 | 0.95 | 26.5 | 0.038 | 6.8 | 5.9 | 2008 | 2800 | 92.5 |
| Example 11 | 52 | 1000 | 6.8 | 0.52 | 50.7 | 0.058 | 12.1 | 8.2 | 1706 | 2300 | 66.3 |
| Example 12 | 16.8 | 1730 | 3.69 | 0.63 | 12.1 | 0.028 | 4.8 | 7.2 | 1876 | 2500 | 56.5 |
| Example 13 | 28.6 | 869 | 8.56 | 0.95 | 26.5 | 0.018 | 6.5 | 5.9 | 2468 | 3500 | 43.6 |
| Comparative Example 1 | 16.8 | 1730 | 3.69 | 0.63 | 16.8 | 0.63 | 3.69 | 7.2 | 920 | 2000 | 51 |
| Comparative Example 2 | 16.8 | 1730 | 3.69 | 0.63 | 16.3 | 0.52 | 3.52 | 7.2 | 1121 | 2000 | 42 |

The following can be observed from the above tables.

The negative electrode materials prepared in the above examples can enable lithium-ion batteries to have high specific capacity and cycling performance.

Compared to the examples, the negative electrode material provided in Comparative Example 1 results in lower specific capacity and cycling performance for lithium-ion batteries.

Further, from Example 1 to Example 3, it can be seen that the thicknesses of the silicon material are 0.52 nm, 0.86 nm, and 1.25 nm, respectively, with mass percentages of Si at 0.8%, 0.9%, and 1.52%, respectively. Example 3, due to its higher Si content and A1 and A2 values, allows more lithium to pass through the carbon shell into the closed pores while preventing lithium precipitation on the particle surface. As a result, the negative electrode material prepared in Example 3 exhibits a higher specific capacity of 2015 mAh/g, along with a capacity retention rate of 89.3%.

The carbon shell thicknesses in Examples 3 to 5 are 5.2 nm, 8.6 nm, and 15.1 nm, respectively, with capacity retention rates of 89.3%, 90.1%, and 91.2%, respectively. From Examples 3 to 5, it can be seen that within the specified range, the shell thickness has a minor effect on specific capacity but a greater impact on cycling performance. A thicker shell layer within the specified range more effectively suppresses expansion during lithium intercalation, allowing the material to maintain the integrity of the core-shell structure during cycling.

Comparing Examples 2, 6, and 7, the main difference lies in the type of silicon material. The formation of Si or silicon carbide can be controlled by adjusting the temperature during the CVD coating process. Silicon carbide does not act as a lithium intercalation active material during charge and discharge, thus contributing no capacity. Therefore, Examples 6 and 7 exhibit lower specific capacities than Example 2, but due to the absence of expansion caused by lithium intercalation in silicon, Examples 6 and 7 exhibit higher capacity retention rates of 92.8% and 93.6%, respectively.

Comparing Examples 8 to 10, the porous carbon used is porous carbon-2, which, compared to porous carbon-1, has a larger BET surface area, pore volume, and pore diameter. It can be observed that as compared to Examples 1 to 7, the negative electrode materials in Examples 8 to 10 exhibit higher specific capacities, as the larger pore volume can accommodate more lithium while maintaining a high capacity retention rate.

For Example 11, the porous carbon used is porous carbon-3, with a pore diameter of 52 nm. Although it exhibits a specific capacity of 1706 mAh/g, the capacity retention rate is only 66.3%. This is because the excessively large pore diameter causes lithium to gradually fail to reach deeper pores during cycling, leading to excess lithium precipitating on the particle surface, accelerating capacity decay. This indicates that when the pore diameter of the porous carbon is 2 nm to 40 nm, lithium-ion batteries exhibit better specific capacity and cycling performance.

As compared Examples 1 to 7 with Example 12, the silicon material thickness in Example 12 is larger at 4.8 nm. Although it also exhibits a high specific capacity of 1876 mAh/g, the high Si content results in an excessively high A1 value and a low A2 value, leaving insufficient expansion space in the pores, which compromises structural stability during cycling and degrades cycling performance. This shows that when the silicon material thickness is 0.5 nm to 4 nm, or the silicon material accounts for 0.01% to 4% of the total mass of the negative electrode material, or the area ratio of the silicon material to the porous carbon is 0.01 to 0.3, or the area ratio of the pores to the porous carbon is 0.3 to 3, lithium-ion batteries exhibit better specific capacity and cycling performance.

As compared Examples 8 to 10 with Example 13, the negative electrode material in Example 13 exhibits a larger shell thickness of 50 nm. In the later stages of cycling, Example 13 experiences a higher energy barrier for lithium diffusion through the carbon shell, leading to gradual precipitation outside the pores, resulting in capacity decay. This indicates that a shell thickness of 2 nm to 20 nm provides better specific capacity and cycling performance.

The embodiments described above are only a portion of the embodiments of the present application, not all embodiments. The detailed descriptions of the embodiments of the present application are not intended to limit the scope of the claimed application but merely represent selected embodiments of the present application. Based on the embodiments in the present application, all other embodiments obtained by those of ordinary skill in the art without creative effort fall within the scope of protection of the present application.

## Claims

1. A negative electrode material, wherein the negative electrode material comprises a core and a shell layer;
the core is porous carbon with pores;
a silicon material is present on wall surfaces of the pores; and
the shell layer is a carbon material.

2. The negative electrode material according to claim 1, wherein
a mass percentage of the silicon material accounts for 0.01% to 20% of a total mass of the negative electrode material.

3. The negative electrode material according to claim 1, wherein
a mass percentage of the silicon material accounts for 0.01% to 4% of a total mass of the negative electrode material.

4. The negative electrode material according to claim 1, wherein
an area ratio of the silicon material to the porous carbon is 0.01 to 0.3.

5. The negative electrode material according to claim 1, wherein
an area ratio of the pores to the porous carbon is 0.3 to 3.

6. The negative electrode material according to any one of claims 1 to 5, wherein
the silicon material comprises at least one of elemental silicon or silicon carbide.

7. The negative electrode material according to any one of claims 1 to 6, wherein
a thickness of the silicon material is 0.5 nm to 4 nm, and/or a thickness of the shell layer is 2 nm to 20 nm.

8. The negative electrode material according to any one of claims 1 to 7, wherein
the core satisfies at least one of the following characteristics:
(a) a specific surface area of the porous carbon is 500 m²/g to 3000 m²/g;
(b) an average pore diameter of the porous carbon is 1 nm to 30 nm;
(c) a pore volume of the porous carbon is 0.1 cm³/g to 1.5 cm³/g;
(d) a D_{V}50 of the porous carbon is 1 µm to 20 µm;
(e) a d002 of the porous carbon is 0.38 nm to 0.41 nm; or
(f) a pore diameter of the porous carbon is 2 nm to 40 nm.

9. The negative electrode material according to any one of claims 1 to 8, wherein
the negative electrode material satisfies the following characteristics:
(g) a pore diameter of the negative electrode material is 3 nm to 30 nm;
(h) a pore volume of the negative electrode material is 0.005 cm³/g to 0.06 cm³/g;
(i) an average pore diameter of the negative electrode material is 0.01 nm to 5 nm; and
(j) a D_{V}50 of the negative electrode material is 1 µm to 20 µm.

10. A negative electrode plate, wherein
the negative electrode plate comprises the negative electrode material according to any one of claims 1 to 9.

11. An electrochemical apparatus, wherein the electrochemical apparatus comprises the negative electrode plate according to claim 10.

12. An electric device, wherein the electric device comprises the electrochemical apparatus according to claim 11.
